# EUROPEAN PATENT SPECIFICATION

(11) **EP 2 684 985 B1**
(45) Date of publication and mention of the grant of the patent: **12.01.2022**
(21) Application number: 12754523.4
(22) Date of filing: 05.03.2012
(51) Int. Cl.: C25D 7/06, C25D 5/50, B21D 22/02, B32B 15/01, C21D 1/18, C21D 1/673, C22C 38/06, C22C 18/00, C22C 21/02, C23C 30/00, C22C 38/00, C22C 38/60, C22C 38/32, C22C 38/28, C22C 38/02, C22C 38/04, C25D 3/04, C25D 3/12, C25D 3/56

(54) **PROCESS FOR PRODUCING HOT-PRESSED MEMBER STEEL SHEET**
VERFAHREN ZUR HERSTELLUNG HEISSGEPRESSTER STAHLBLECH
PROCÉDÉ DE FABRICATION D'UN ÉLÉMENT PRESSÉ À CHAUD QUI UTILISE UNE TÔLE D'ACIER

(30) Priority: 10.03.2011 JP 2011052500; 30.11.2011 JP 2011261798
(43) Date of publication of application: 15.01.2014
(73) Proprietor: JFE Steel Corporation, Tokyo 100-0011 (JP)
(72) Inventor: NAKAJIMA, Seiji, Tokyo 100-0011 (JP); MIYOSHI, Tatsuya, Tokyo 100-0011 (JP); NAKAMARU, Hiroki, Tokyo 100-0011 (JP)
(74) Representative: Grünecker Patent- und Rechtsanwälte PartG mbB
(86) International application number: PCT/JP2012/056209
(87) International publication number: WO 2012/121399

(56) References cited:
- WO-A1-2012/018014
- JP-A- 2004 124 208
- JP-A- 2007 314 874
- JP-A- 2009 127 126
- JP-A- 2010 018 856
- US-A- 5 024 900
- US-A- 6 143 430
- US-A1- 2006 130 940

## Description

### Technical Field

The present invention relates to a method for manufacturing steel sheets to be hot-pressed suitable for suspension members and body structure members of an automobile which are manufactured by using a hot pressing technique and to methods for manufacturing hot-pressed members from the steel sheets.

### Background Art

To date, many suspension members and body structure members of an automobile have been manufactured by pressing steel sheets of specified strength. Recently, it has been strongly required to reduce the weight of an automobile body from the viewpoint of global environmental conservation, and efforts have been made to reduce the thickness of a steel sheet for an automobile body by strengthening the steel sheet. However, strengthening of a steel sheet is accompanied by a decrease in press formability, which increases the number of cases in which it is difficult to form the steel sheet into a designated shape.

Accordingly, Patent Literature 1 discloses a manufacturing method called hot pressing technique for ensuring not only increased formability but also increased strength of a steel sheet by heating the steel sheet and then placing the steel sheet in a mold including a die and a punch in which the steel sheet is deformed and simultaneously rapidly cooled. In this hot pressing technique, however, scale (iron oxide) is generated on the surface of the steel sheet, because the steel sheet is heated up to a high temperature around 950°C before hot pressing is performed. The scale causes damage to the mold or to the surface of the member after hot pressing has been performed by peeling off from the surface of the steel sheet during hot pressing. Moreover, the scale left on the surface of the member also results in a poor appearance and poor paint adhesion. Therefore, the scale on the surface of the member is usually removed by pickling or shot blasting, which involves using a complicated manufacturing process and results in a decrease in productivity. Furthermore, although sufficient corrosion resistance is also required for suspension members and body structure members of an automobile, the corrosion resistance of the hot-pressed members manufactured by the process described above is very unsatisfactory, because the hot-pressed members are not provided with an anti-corrosion film such as a coated layer.

Therefore, hot-pressing techniques which suppress generation of scale during heating before hot pressing is performed and which increase the corrosion resistance of the members after hot pressing has been performed are required, and then some hot-pressing methods such as a method using a steel sheet provided with a film such as a coated layer and a method of hot pressing using the steel sheet are presented. For example, Patent Literature 2 discloses a method for manufacturing a hot-pressed member having good corrosion resistance which is coated with a Zn-Fe base alloy or a Zn-Fe-Al base alloy by hot-pressing a steel sheet coated with Zn or a Zn base alloy.

Moreover, in order to suppress liquid metal embrittlement cracking which is caused by molten Zn in the coated layer intruding into the base steel sheet during high-temperature heat treatment such as heating before hot pressing is performed, Patent Literature 3 discloses a steel sheet for heat treatment which has a specific composition and which is provided with a coated layer of a Fe-Zn alloy the Fe content of which is from 13 to 80%, the Al content of which is not more than 0.4%, and the Zn coating weight of which is from 10 to 65 g/m². A further method for making coated structural automotive components is disclosed in US 2006/130940 A1.

### Citation List

### Patent Literature

PTL 1: UK Patent No. GB1490535
PTL 2: Japanese Patent No. 3663145
PTL 3: Japanese Patent No. 4329639

### Summary of Invention

### Technical Problem

However, although generation of scale is suppressed to some extent on the surface of the hot-pressed member manufactured by the method described in Patent Literature 2, the resistance of the member to oxidation is not necessarily good, because a large amount of ZnO is generated, which results in a poor appearance and poor paint adhesion. Moreover, liquid metal embrittlement cracking may occur, which is caused by Zn in the coated layer. Liquid metal embrittlement cracking which is caused by Zn in the coated layer cannot be completely suppressed for the steel sheet described in Patent Literature 3, in the case that the steel sheet is deformed at a high temperature as by hot pressing.

An object of the present invention is to provide a method for manufacturing a hot-pressed member from a steel sheet which has not only sufficient resistance to oxidation in order to suppress generation of scale or ZnO during hot pressing but also sufficient resistance to liquid metal brittleness in order to prevent the occurrence of liquid metal embrittlement cracking caused by an element in a coated layer.

### Solution to Problem

The present inventors diligently conducted a study on a steel sheet to be hot-pressed for the object described above, and as a result, it was clarified that it is effective to provide the surface of the steel sheet with a coated layer the melting point of which is not lower than 800°C and the coating weight of which is not less than 45 g/m², in order to obtain sufficient resistance to oxidation and liquid metal brittleness.

The present invention, which was completed on the basis of the knowledge described above, provides a method for manufacturing a steel sheet to be hot-pressed which has on the surface thereof a coated layer the melting point of which is not lower than 800°C and the coating weight of which per side is from 45 to 90 g/m².

The coated layer is preferably an electroplated layer in the steel sheet to be hot-pressed according to the present invention.

According to the method of the invention the coated steel sheet is heated up to a temperature in the range of the Ac₃ transformation point to 1000°C at a heating rate not less than 3°C/s.

It is preferable in the method for manufacturing a hot-pressed member according to the present invention that the time the steel sheet stays at a temperature not lower than the melting point of the coated layer be no longer than 200 s or that the heating rate be not less than 30°C/s. Advantageous Effects of Invention

According to the present invention, it has become possible to manufacture a steel sheet to be hot-pressed having not only sufficient resistance to oxidation in order to suppress generation of scale or ZnO during hot pressing but also sufficient resistance to liquid metal brittleness in order to prevent liquid metal embrittlement cracking caused by an element in a coated layer. The hot-pressed members manufactured by the method according to the present invention from the below described steel sheet to be hot-pressed are suitable for suspension members and body structure members of an automobile, because they not only have an excellent appearance and paint adhesion but also prevent the occurrence of liquid metal embrittlement cracking caused by an element in a coated layer.

### Brief Description of Drawings

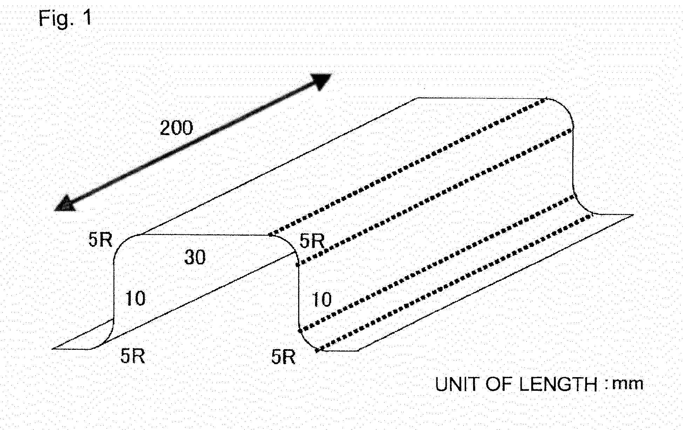

[Fig. 1] Fig. 1 illustrates the shape of the hat-type member manufactured in the example of the present invention. Description of Embodiments

### 1) A Steel Sheet to be Hot-Pressed

### 1-1) A Coated Layer

A steel sheet to be hot-pressed according to the method of the present invention is provided with a coated layer on the surface thereof, the melting point of which is not lower than 800°C and the coating weight of which per side is from 45 to 90 g/m², in order to ensure resistance to oxidation during hot pressing and resistance to liquid metal brittleness.

In order to ensure resistance to liquid metal brittleness, the melting point of the coated layer is set to be not lower than 800°C. Liquid metal embrittlement cracking of the base metal is brought about by a metal composition in the coated layer, as the composition element melts and intrudes into grain boundaries of the steel sheet serving as a base metal. In particular, when the steel sheet is simultaneously heated and deformed by a method such as bending, it is easier for molten metal (liquid metal) to intrude into the grain boundaries. As the steel sheet is heated up to a temperature in the range of the Ac₃ transformation point to 1000°C before hot pressing in the method according to the present invention, in the case that the melting point of the coated layer is lower than the heating temperature before hot pressing is performed, if the melting point which is not lower than 800°C is as close to the heating temperature as possibly, a shorter contact time is assured for the molten metal and the base steel sheet, which results in better resistance to liquid metal brittleness. Moreover, if the melting point which is not lower than 800°C is as close to the heating temperature as possibly, a higher viscosity is assured for the molten metal, which results in better resistance to liquid metal brittleness, because, if the temperature of the molten metal is high, the viscosity of the molten metal is low, which results in increased wettability of the molten metal, making it easier for the molten metal to intrude into grain boundaries of the base metal steel sheet. The fact described above leads to the conclusion that the melting point of the coated layer is set to be not lower than 800°C. Incidentally, in the case that the melting point of the coated layer is higher than the heating temperature before hot pressing is performed, there is no problem of liquid metal brittleness at all.

Moreover, in the case that the coated layer contains Zn, if the melting point of the coated layer is not lower than 800°C, generation of ZnO is suppressed, which results in good resistance to oxidation.

The examples of coated layers the melting point of which is not lower than 800°C are Cr plating (melting point: 1900°C), Ni plating (melting point: 1455°C), and Zn-Ni plating (melting point: 881°C). Although the method for making these coated layers is not necessarily limited to any specified one, a well-known electroplating method is suitable. In the case of an electroplating method, as a coated layer is usually formed in a temperature range from 5 to 80°C, molten metal and a steel sheet do not contact each other before hot pressing. Therefore, electroplating metal does not intrude into the grain boundaries of the base steel sheet or oxidation of plated metal such as generation of ZnO does not occur. Consequently, it can be said that it is advantageous from the viewpoint of resistance to liquid metal brittleness and oxidation that the coated layer be an electroplated layer.

In the case that a coated layer of Zn-Ni is formed by an electroplating method, a γ phase having a crystal structure of any one of Ni₂Zn₁₁, NiZn₃, and Ni₅Zn₂₁ is generated, if the Ni content of the coated layer is from 10 to 25 mass%. The melting point of the γ phase is 881°C in accordance with the equilibrium diagram. The generation of the γ phase is not necessarily in accordance with the equilibrium diagram of Ni-Zn alloy, in the case that the Ni content is from 10 to 25 mass%. It is supposed that the reason for this is that the reaction for generation of the coated layer by a method such as electroplating progresses in a non-equilibrium state. The γ phase of Ni₂Zn₁₁, NiZn₃ or Ni₅Zn₂₁ can be confirmed by X-ray diffraction analysis or electron diffraction analysis with TEM (Transmission Electron Microscopy).

The reason why the coating weight per side is set to be from 10 to 90 g/m² is that, in the case that the coating weight per side is less than 10 g/m², resistance to oxidation is poor because scale generation is not sufficiently suppressed, and, in the case that the coating weight per side is larger than 90 g/m², there is no further increase in effect but the cost increases. According to the invention the coating weight per side is 45 to 90 g/m².

### 1-2) Base Steel Sheet

An example of a base steel sheet which is to be provided with a coated layer and which is to be made into a hot-pressed member the strength of which is not less than 980 MPa is a hot-rolled steel sheet or a cold-rolled steel sheet the composition of which indicated in percent by mass is as follows: C from 0.15 to 0.5%, Si from 0.05 to 2.0%, Mn from 0.5 to 3%, P not larger than 0.1%, S not larger than 0.05%, Al not larger than 0.1%, N not larger than 0.01%, and the remainder Fe and inevitable impurities. The reason for the specific limits imposed on each composition element will be described below. The notation "%" for the content of a composition, herein, shall denote percent by mass, unless otherwise noted.

### C: from 0.15 to 0.5%

It is necessary that C content be not less than 0.15% in order to make the TS of a hot-pressed member not less than 980MPa, as C is an element used to increase steel strength. On the other hand, if C content is larger than 0.5%, there is a marked decrease in the blanking workability of the steel sheet. Therefore, C content is set to be from 0.15 to 0.5%.

### Si: from 0.05 to 2.0%

It is necessary that Si content be not less than 0.05% in order to make the TS of a hot-pressed member not less than 980 MPa, as Si is an element used to increase steel strength as well as C. On the other hand, if Si content is larger than 2.0%, as well as there being a marked increase in generation of surface defects called red scale during hot rolling, there are an increase in rolling load and a reduction in the ductility of the hot-rolled steel sheet. Moreover, if Si content is larger than 2.0%, it may have a bad effect on the performance of the plating process for forming a coated layer, the main content of which is Zn or Al, on the surface of the steel sheet. Therefore, Si content is set to be from 0.05 to 2.0%.

### Mn: from 0.5 to 3%

Mn is an element which is effective for increasing the hardenability of steel by suppressing ferrite transformation, and which is also effective at for lowering the heating temperature before hot pressing is performed, because it lowers the Ac₃ transformation point. It is necessary that Mn content be not less than 0.5% in order to realize these effects. On the other hand, if Mn content is larger than 3%, it decreases the uniformity of characteristics of base steel sheet and hot-pressed member because of its segregation. Therefore, Mn content is set to be from 0.5 to 3%.

### P: not larger than 0.1%

If P content is larger than 0.1%, as well as decreasing the uniformity of characteristics of base steel sheet and hot-pressed member because of its segregation, it decreases their toughness. Therefore, P content is set to be not larger than 0.1%.

### S: not larger than 0.05%

If S content is larger than 0.05%, it decreases the toughness of hot-pressed member. Therefore, S content is set to be not larger than 0.05%.

### Al: not larger than 0.1%

If Al content is larger than 0.1%, it decreases the blanking workability and hardenability of the steel sheet. Therefore, Al content is set to be not larger than 0.1%.

### N: not larger than 0.01%

If N content is larger than 0.01%, it decreases the blanking workability and hardenability of the steel sheet by forming a nitride such as AlN during hot rolling and heating before hot pressing is performed. Therefore, N content is set to be not larger than 0.01%.

It is preferable that the remainder, which includes Fe and inevitable impurities, have simultaneously or separately at least one element selected among Cr the content of which is from 0.01 to 1%, Ti the content of which is not larger than 0.2% and B the content of which is from 0.0005 to 0.08%, and Sb the content of which is from 0.003 to 0.03% for the following reasons.

### Cr: from 0.01 to 1%

Cr is an element which is effective for strengthening steel as well as at increasing hardenability. It is preferable that Cr content be not less than 0.01% in order to realize those effects. On the other hand, if Cr content is larger than 1%, there is a marked increase in cost. Therefore, it is preferable that the upper limit of Cr content be 1%.

### Ti: not larger than 0.2%

Ti is an element which is effective not only for strengthening steel but also for increasing toughness by grain refining. Moreover, Ti is an element which is also effective for inducing a hardenability improvement effect by using solid solution of B described next, because Ti forms a nitride in preference to B. On the other hand, if Ti content is larger than 0.2%, there are a marked increase in rolling load during hot rolling and a marked decrease in the toughness of hot-pressed member. Therefore, it is preferable that the upper limit of Ti content be 0.2%.

### B: from 0.0005 to 0.08%

B is an element which is effective for increasing hardenability during hot pressing and toughness after hot pressing has been performed. It is preferable that B content is not less than 0.0005% in order to realize these effects. On the other hand, if B content is larger than 0.08%, there is a marked increase in rolling load during hot rolling and a martensite phase or a bainite phase is generated after hot rolling has been performed, which results in cracking of steel sheet. Therefore, it is preferable that the upper limit of B content be 0.08%.

### Sb: from 0.003 to 0.03%

Sb is effective for suppressing generation of a decarburized layer on the surface of the steel sheet through the processes from heating before hot pressing is performed to cooling by the series of treatments in hot pressing. It is necessary that Sb content be not less than 0.003% in order to realize this effect. On the other hand, if Sb content is larger than 0.03%, there are an increase in rolling load and a decrease in productivity. Therefore, it is preferable that Sb content be from 0.003 to 0.03%.

### 2) Method for Manufacturing Hot-Pressed Member

The steel sheet to be hot-pressed according to the method of the present invention described above is formed into a hot-pressed member by hot pressing after being heated up to a temperature in the range of the Ac₃ transformation point to 1000°C. It is for the purpose of strengthening the hot-pressed member by generating a hard phase such as a martensite phase by rapid cooling during hot pressing that the steel sheet is heated up to a temperature not lower than Ac₃ transformation point before hot pressing is performed. Moreover, the reason why the upper limit of the heating temperature is set to be 1000°C is that resistance to oxidation is poor if it is higher than 1000°C. Incidentally, heating temperature, herein, shall refer to the maximum temperature of the steel sheet.

It is preferable that intrusion of a metal element in a coated layer into grain boundaries of a base steel sheet or oxidation of the metal element is suppressed as far as possibly before and during heating in hot pressing in order to increase resistance to liquid metal brittleness and oxidation during hot pressing, which is effectively realized by avoiding alloying treatment of the coated layer of the base steel sheet to be hot-pressed and also, as described below, by shortening the time the steel sheet stays at a temperature not lower than the melting point of the coated layer or by increasing the heating rate.

As the melting point of a coated layer of steel sheet according to the present invention is not lower than 800°C, the resistance to liquid metal brittleness is not decreased, even if the time the steel sheet stays at a temperature not lower than the melting point of the coated layer is longer than 200 s. However, local generation of scale at defects in the coated layer and generation of ZnO in the coated layer containing Zn are increased, as the time the steel sheet remains exposed to high temperature is longer, especially, markedly increased, if the steel sheet remains exposed too long to an ambient temperature that is not lower than the melting point of the coated layer. Therefore, it is preferable that the time the steel sheet stays at a temperature not lower than the melting point of the coated layer be as short as possibly, preferably no longer than 200 s. It is more preferable that the time be no longer than 150 s.

It is necessary that the heating rate before hot pressing is performed be not less than 3°C/s in order to increase resistance to oxidation, and it is preferable that it be as large as possibly, especially it is more preferable that it be not less than 30°C/s. Moreover, it is preferable that the holding time of the steel sheet at the maximum temperature be short for the same reason as described above, preferably no longer than 300 s, more preferably no longer than 150 s, yet more preferably no longer than 10 s.

Examples of the heating method before hot pressing is performed include heating by an electric furnace or a gas furnace, flame heating, electrical heating, high-frequency heating and induction heating.

### EXAMPLES

The base steel sheet was a cold rolled steel sheet 1.6 mm in thickness the Ac₃ transformation point of which is 820°C and the composition of which indicated in percent by mass is as follows: C 0.23%, Si 0.25%, Mn 1.2%, P 0.01%, S 0.01%, Al 0.03%, N 0.005%, Cr 0.2%, Ti 0.02%, B 0.0022%, Sb 0.008% and the remainder Fe and inevitable impurities. Steel sheets No. 1 through No. 23 were made using an electroplating method for forming coated layers of Cr, Ni or Zn-Ni on the surface of the cold rolled steel sheet. The Cr plating was carried out in a plating bath the chromic acid concentration of which was 250 g/L, the sulfuric acid concentration of which was 2.5 g/L and the bath temperature of which was 50°C, with a current density of 25 A/dm², and the plating weight was adjusted by varying plating time. The Ni plating was carried out in a plating bath the nickel sulfate hexahydrate concentration of which was 240 g/L, the boric acid concentration of which was 30 g/L, the pH value of which was 3.6 and the bath temperature of which was 50°C, with a current density of 5 A/dm², and the plating weight was adjusted by varying plating time. The Zn-Ni plating was carried out in a plating bath the nickel sulfate hexahydrate concentration of which was 200 g/L, the zinc sulfate heptahydrate concentration of which was from 10 to 100 g/L, the pH value of which was 1.5, the bath temperature of which was 50°C, with a current density from 5 to 100 A/dm², and the plating weight was adjusted by varying plating time, while Ni content was adjusted (to 10 wt%, 12 wt% or 25 wt%) by varying zinc sulfate heptahydrate concentration and current density. Moreover, steel sheets No. 24 through No. 39 were made using a hot dip plating method for forming a coated layers of Zn, Zn-Fe or Al-Si on the surface of the cold rolled steel sheet described above. The Zn plating was carried out by conventional hot dip zinc galvanizing. The Zn-Fe plating was carried out by performing an alloying treatment after hot dip zinc galvanizing, and Fe content was adjusted (to 10 mass% or 25 mass%) by varying the temperature and time of the alloying treatment. The Al-Si plating was carried out in an aluminum hot dipping bath the Si content of which was 10 wt%. The details of the coated layers of the steel sheets No. 1 through No. 39 which were made as described above are given in Tables 1 and 2.

The samples of 100 mm × 200 mm obtained from steel sheets No. 1 through No. 39 were hot pressed into hat-type members illustrated in Fig. 1 with a hat-type mold immediately after being heated by electric furnace or electrical heating method under the conditions given in Tables 1 and 2. The cooling rate in that hot pressing process is given in Tables 1 and 2. The hat-type mold had a semicylindrical shape the size of which was as follows: the length of the top plane was 30 mm, the radius of both top corners was 5 mm, the length of the side plane was 10 mm, the radius of both bottom corners was 5 mm, and the remainder was the bottom plane. Hot pressing was carried out with a blank holding force of 20 tons and a working speed of 15 shot/min.

Resistance to oxidation and liquid metal brittleness of hat-type members made as described above were evaluated in the following way. Resistance to oxidation: the resistance to oxidation was evaluated by the difference between the weight of the hat-type member and that of the steel sheet before heating. This difference indicates the increase in weight by generation of scale and ZnO, therefore it is understood that the lower the difference the better the resistance to oxidation, and that symbol O indicates that the sample satisfies the object of the present invention, where the evaluation results are indicated as follows:
O; weight difference ≤ 5 g/m², and
×; 5 g/m² < weight difference.

Resistance to liquid metal brittleness: the resistance to liquid metal brittleness was evaluated on the basis of crack density (number/mm), which is defined as the number of cracks penetrating into the base steel sheet per unit length observed in the field of a scanning electron microscope (SEM) for a length of 4 mm in the cross section of the sample obtained from the outer surface of the upper corner of the hat-type member. It is understood that the lower the crack density the better the resistance to liquid metal brittleness, and that symbol O indicates that the sample satisfies the object of the present invention, where the evaluation results are indicated as follows:
O; crack density = 0,
Δ; 0 < crack density < 3, and
×; 3 ≤ crack density.

The results are given in Tables 1 and 2. It is understood that the steel sheets No. 1 through No. 12, No. 14 and No. 16 through No. 18 and No. 20, which are the steel sheets to be hot-pressed according to the present invention, have sufficient resistance to oxidation and liquid metal brittleness.

### [Table 1]

**Table 1**

| Steel Sheet No. | Coated Layer | | | | Heating/Cooling Conditions | | | | | Resistance to Oxidation | | | Resistance to Liquid Metal Brittleness | | Note |
|---|---|---|---|---|---|---|---|---|---|---|---|---|---|---|---|
| | Species | Phase | Melting Point (°C) | Coating Weight (g/m2) | Heati ng Rate (°C/s) | Heating Temperature (°C) | Holding Time (s) | Cooling Rate (°C/s) | Staying Time at or above Melting Point (s) | Change in Weight (g/m2) | Evaluation | Oxidation State | Crack Density (number/ mm) | Evaluation | |
| 1 | Cr | - | 1900 | 45 | 3 | 900 | 0 | 30 | 0 | +0.3 | O | - | 0 | O | Example of the Present |
| 2 | Cr | - | 1900 | 45 | 3 | 950 | 0 | 30 | 0 | +0.4 | O | - | 0 | O | Example of the Present |
| 3 | Cr | - | 1900 | 45 | 3 | 950 | 150 | 30 | 0 | +0.5 | O | - | 0 | O | Example of the Present |
| 4 | Cr | - | 1900 | 45 | 3 | 950 | 300 | 30 | 0 | +1.0 | O | - | 0 | O | Example of the Present |
| 5 | Ni | - | 1455 | 45 | 3 | 900 | 0 | 30 | 0 | +0.5 | O | - | 0 | O | Example of the Present |
| 6 | Ni | - | 1455 | 45 | 3 | 950 | 0 | 30 | 0 | +0.7 | O | - | 0 | O | Example of the Present |
| 7 | Ni | - | 1455 | 45 | 3 | 950 | 150 | 30 | 0 | +1.0 | O | - | 0 | O | Example of the Present |
| 8 | Ni | - | 1455 | 45 | 3 | 950 | 300 | 30 | 0 | +1.5 | O | - | 0 | O | Example of the Present |
| 9 | Zn-12%Ni | γ | 881 | 45 | 3 | 900 | 0 | 30 | 7.0 | +1.5 | O | - | 0 | O | Example of the Present |
| 10 | Zn-12%Ni | γ | 881 | 45 | 30 | 900 | 0 | 30 | 1.3 | +1.2 | O | - | 0 | O | Example of the Present |
| 11 | Zn-12%Ni | γ | 881 | 45 | 100 | 900 | 0 | 30 | 0.8 | +0.6 | O | - | 0 | O | Example of the Present |
| 12 | Zn-12%Ni | γ | 881 | 45 | 3 | 950 | 0 | 30 | 25.3 | +2.0 | O | - | 0 | O | Example of the Present |
| 13 | Zn-12%Ni | γ | 881 | 45 | 1 | 950 | 150 | 30 | 221.3 | +5.5 | × | much of ZnO | 0 | O | Comparative Example |
| 14 | Zn-12%Ni | γ | 881 | 45 | 3 | 950 | 150 | 30 | 175.3 | +3.0 | O | - | 0 | O | Example of the Present |
| 15 | Zn-12%Ni | γ | 881 | 45 | 1 | 950 | 300 | 30 | 371.3 | +6.5 | × | much of ZnO | 0 | O | Comparative Example |
| 16 | Zn-12%Ni | γ | 881 | 45 | 3 | 950 | 300 | 30 | 325.3 | +4.5 | O | - | 0 | O | Example of the Present |
| 17 | Zn-10%Ni | γ | 881 | 45 | 3 | 900 | 0 | 30 | 7.0 | +4.0 | O | - | 0 | O | Example of the Present |
| 18 | Zn-25%Ni | γ | 881 | 45 | 3 | 900 | 0 | 30 | 7.0 | +3.5 | O | - | 0 | O | Example of the Present |
| 19 | Zn-12%Ni | γ | 881 | 10 | 3 | 900 | 0 | 30 | 7.0 | +4.5 | O | - | 0 | O | Comparative Example |
| 20 | Zn-12%Ni | γ | 881 | 90 | 3 | 900 | 0 | 30 | 7.0 | +0.5 | O | - | 0 | O | Example of the Present |

### [Table 2]

**Table 2**

| Steel Sheet No. | Coated Layer | | | | Heating/Cooling Conditions | | | | | Resistance to Oxidation | | | Resistance to Liquid Metal Brittleness | | Note |
|---|---|---|---|---|---|---|---|---|---|---|---|---|---|---|---|
| | Species | Phase | Melting Point (°C) | Coating Weight (g/m² ) | Heating Rate (°C/s) | Heating Temperature (°C) | Holding Time (s) | Cooling Rate (°C/s) | Staying Time a above Melting Point (s) | Change in t or Weight (g/m²) | Evaluation | Oxidation State | Crack Density (number/ mm) | Evaluation | |
| 21 | Cr | - | 1900 | 5 | 3 | 900 | 0 | 30 | 0 | +5.5 | × | Scale | 0 | O | Comparative Example |
| 22 | Ni | - | 1455 | 5 | 3 | 900 | 0 | 30 | 0 | +6.5 | × | Scale | 0 | O | Comparative Example |
| 23 | Zn-12%Ni | γ | 881 | 5 | 3 | 900 | 0 | 30 | 7.0 | +9.0 | × | Scale | 0 | O | Comparative Example |
| 24 | Zn-25%Fe | Γ | 782 | 45 | 3 | 900 | 0 | 30 | 43.3 | +5.5 | × | much of ZnO | 1.0 | Δ | Comparative Example |
| 25 | Zn-25%Fe | Γ | 782 | 45 | 3 | 950 | 0 | 30 | 61.6 | +6.0 | × | much of ZnO | 2.0 | A | Comparative Example |
| 26 | Zn-25%Fe | Γ | 782 | 45 | 3 | 950 | 150 | 30 | 211.6 | +7.0 | × | much of ZnO | 3.0 | × | Comparative Example |
| 27 | Zn-25%Fe | Γ | 782 | 45 | 3 | 950 | 300 | 30 | 361.6 | +9.5 | × | much of ZnO | 3.5 | × | Comparative Example |
| 28 | Zn-10%Fe | δ | 665 | 45 | 3 | 900 | 0 | 30 | 86.2 | +7.0 | × | much of ZnO | 1.5 | Δ | Comparative Example |
| 29 | Zn-10%Fe | δ | 665 | 45 | 3 | 950 | 0 | 30 | 104.5 | +7.5 | × | much of ZnO | 2.0 | Δ | Comparative Example |
| 30 | Zn-10%Fe | δ | 665 | 45 | 3 | 950 | 150 | 30 | 254.5 | +9.0 | × | much of ZnO | 3.0 | × | Comparative Example |
| 31 | Zn-10%Fe | δ | 665 | 45 | 3 | 950 | 300 | 30 | 404.5 | +12.0 | × | much of ZnO | 4.0 | × | Comparative Example |
| 32 | AI-10%Si | - | 577 | 45 | 3 | 900 | 0 | 30 | 118.4 | +2.5 | O | - | 1.5 | Δ | Comparative Example |
| 33 | AI-10%Si | - | 577 | 45 | 3 | 950 | 0 | 30 | 136.8 | +3.0 | O | - | 2.0 | Δ | Comparative Example |
| 34 | AI-10%Si | - | 577 | 45 | 3 | 950 | 150 | 30 | 286.8 | +4.0 | O | - | 3.0 | × | Comparative Example |
| 35 | AI-10%Si | - | 577 | 45 | 3 | 950 | 300 | 30 | 436.8 | +4.5 | O | - | 4.0 | × | Comparative Example |
| 36 | Zn | - | 420 | 45 | 3 | 900 | 0 | 30 | 176.0 | +9.0 | × | much of ZnO | 2.0 | Δ | Comparative Example |
| 37 | Zn | - | 420 | 45 | 3 | 950 | 0 | 30 | 194.3 | +11.0 | × | much of ZnO | 2.5 | Δ | Comparative Example |
| 38 | Zn | - | 420 | 45 | 3 | 950 | 150 | 30 | 344.3 | +15.0 | × | much of ZnO | 4.0 | × | Comparative Example |
| 39 | Zn | - | 420 | 45 | 3 | 950 | 300 | 30 | 494.3 | +17.0 | × | much of ZnO | 5.0 | × | Comparative Example |

## Claims

1. A method for manufacturing a hot-pressed member, the method comprising: heating a steel sheet to be hot-pressed having a coated layer provided directly on a surface thereof, wherein the melting point of the coated layer is not lower than 800°C and a coating weight of the coated layer per side is from 45 to 90 g/m², up to a temperature in the range of the Ac₃ transformation point to 1000°C at a heating rate not less than 3°C/s; and hot-pressing the heated steel sheet.

2. The method for manufacturing a hot-pressed member according to Claim 1,
wherein the steel sheet stays no longer than 200 s at a temperature that is not lower than the melting point of the coated layer.

3. The method for manufacturing a hot-pressed member according to Claim 1 or Claim 2, wherein the heating rate is not less than 30°C/s.

## Patentansprüche

1. Verfahren zum Herstellen eines warmgepressten Teils, wobei das Verfahren Erwärmen eines Warmpressen zu unterziehenden Stahlblechs mit einer direkt auf eine Oberfläche desselben vorhandenen Beschichtung auf eine Temperatur im Bereich des Ac₃-Umwandlungspunktes bis 1000 °C bei einer Erwärmungsgeschwindigkeit von nicht weniger als 3 °C/s sowie Warmpressen des erwärmten Stahlblechs umfasst und dabei der Schmelzpunkt der Beschichtung nicht unter 800 °C liegt und das Beschichtungsgewicht der Beschichtung pro Seite 45 bis 90 g/m² beträgt.

2. Verfahren zum Herstellen eines warmgepressten Teils nach Anspruch 1, wobei das Stahlblech nicht länger als 200 s bei einer Temperatur verbleibt, die nicht unter dem Schmelzpunkt der Beschichtung liegt.

3. Verfahren zum Herstellen eines warmgepressten Teils nach Anspruch 1 oder Anspruch 2, wobei die Erwärmungsgeschwindigkeit nicht weniger als 30 °C/s beträgt.

## Revendications

1. Procédé de fabrication d'un élément pressé à chaud, le procédé comprenant : le chauffage d'une tôle d'acier destinée à être pressée à chaud ayant une couche de revêtement fournie directement sur une surface de celle-ci, le point de fusion de la couche de revêtement n'étant pas inférieur à 800 °C et un poids de revêtement de la couche de revêtement par côté allant de 45 à 90 g/m², jusqu'à une température dans la plage allant de la température de transformation Ac₃ à 1000 °C à une vitesse de chauffage non inférieure à 3 °C/s ; et le pressage à chaud de la tôle d'acier chauffée.

2. Procédé de fabrication d'un élément pressé à chaud selon la revendication 1, dans lequel la tôle d'acier ne séjourne pas plus de 200 s à une température qui n'est pas inférieure au point de fusion de la couche de revêtement.

3. Procédé de fabrication d'un élément pressé à chaud selon la revendication 1 ou la revendication 2, dans lequel la vitesse de chauffage n'est pas inférieure à 30 °C/s.
